# EUROPEAN PATENT SPECIFICATION

(11) **EP 0 781 433 B1**
(45) Date of publication and mention of the grant of the patent: **02.12.1998**
(21) Application number: 95931282.8
(22) Date of filing: 08.09.1995
(51) Int. Cl.: G06F 13/364

(54) **BUS ASSIGNMENT SYSTEM FOR DSP PROCESSORS**
BUSZUWEISUNGSSYSTEM FÜR DIGITALSIGNALPROZESSOREN
SYSTEME D'ATTRIBUTION DE BUS POUR PROCESSEURS DE TRAITEMENT DE SIGNAUX NUMERIQUES

(30) Priority: 16.09.1994 GB 9418753
(43) Date of publication of application: 02.07.1997
(73) Proprietor: Ionica International Limited, Cambridge CB4 4AS (GB)
(72) Inventor: SPREADBURY, David, John, Cambridge CB2 5PR (GB); IRVING, Clive, Russell, Cambridge CB4 1RP (GB)
(74) Representative: Hogg, Jeffery Keith
(86) International application number: GB9502130
(87) International publication number: WO9608774

(56) References cited:
- EP-A- 0 425 194
- EP-A- 0 654 743
- WO-A-94/09437
- US-A- 4 837 736

## Description

The invention relates to an electronic circuit comprising processors, in particular digital signal processors, connected via communication busses to other circuit components.

Known processors for digital signal processing (DSP) control their associated communication with other devices (e.g. memory, communication devices, etc.) via a bus which typically consists of several wires carrying an address, several wires carrying data, and further wires carrying control signals (e.g. read, write).

Although in many systems the processor is in complete control of the bus, known DSP processors are provided with bus grant facilities whereby control of the bus may be granted to other devices on the bus so that the other device may perform some specific function, which normally takes the form of access to a system component which is also accessed by the processor (this system component thus being a shared resource). A typical example would be where a communications device accesses a memory which is also accessed by the processor. Such a mechanism is known as Direct Memory Access (DMA), and results in faster operation than if the processor were to have to pass data between the communications device and the memory.

To avoid damage and/or erroneous operation when more than one device share a bus, each wire of the bus may be driven by only one device at a time. Other devices capable of driving a wire but forbidden to do so must "tristate" their outputs, i.e. make their outputs to the bus go to a high impedance state.

The DSP processor acts as a "master", having the bus assigned to itself by default and only relinquishing the bus for use by another device when a request from that other device is received. The DSP processor accepts this request, when convenient to itself (usually on an instruction boundary), but without unnecessary delay, by tristating its own bus divers and returning a grant signal to the requesting device, which may then legitimately drive the bus, typically for a relatively short time, before returning it (by removing the request signal).

This known approach requires a DSP processor to be provided with control code to ensure synchronisation between the processor and other controlling devices. Continuous monitoring (polling) of the state of the other device is required, or it must be otherwise ensured that the processor and other device operate synchronously. This requirement usually results in an increase in complexity of the hardware or software.

WO-A-94 094 37 discloses an arrangement of a plurality of processors, a common bus to a resource for sharing by the processors, and a control unit for controlling assignment of the bus to each processor, the bus being assigned by default to the control unit.

The present invention is defined in the claims, to which reference should now be made.

The present invention preferably provides an electronic circuit comprising a plurality of processors, a common bus to a resource for sharing by the processors, and a control unit, the control unit controlling assignment of the bus to each processor, the bus being assigned by default to the control unit, in which the control unit sends a bus request signal by default to each processor causing each processor to send by default a corresponding bus grant signal to the control unit. The processors are preferably DSP processors.

Preferably, the control unit controls the timing and sequence of assignments of the bus to the processors.

Each processor preferably includes internal program memory and data memory or registers. Such a processor can continue to execute instructions, without the bus being assigned to it, for as long as these instructions operate only on the internal memory or registers and do not require a bus assignment. Internal operations of this type make up a significant fraction of executable code, the bus only being required when data is to be transferred to or from another device. When an instruction is reached which requires the bus, execution halts until the bus is assigned to the processor. This mechanism provides efficient operation, and synchronisation between the processor code and the control unit without the use of synchroniation control signals.

The preferred electronic circuit can be provided in a base station operative to receive time division multiple access (TDMA) signals from a number of subscriber units. Signals are preferably received over air by radio. Subscriber units are preferably at fixed locations. When receiving signals on more than one radio carrier frequency each processor preferably operates on a different radio carrier frequency signal.

A preferred embodiment of the invention will now be described by way of example and with reference to the drawings in which:
Figure 1 (a) is a block diagram illustrating bus assignment of a DSP processor in a circuit (prior art);
Figure 1 (b) is a diagram illustrating bus request and bus grant signals over time in the circuit of Figure 1 (a) (prior art);
Figure 1 (c) is a diagram indicating bus assignment over time in the circuit of Figure 1 (a) (prior art);
Figure 2 (a) is a block diagram illustrating bus assignment in a circuit according to the present invention;
Figure 2 (b) is a diagram illustrating bus assignment and bus grant signals over time in the circuit of Figure 2 (a); and
Figure 2 (c) is a diagram illustrating bus assignment over time in the circuit of Figure 2 (a).

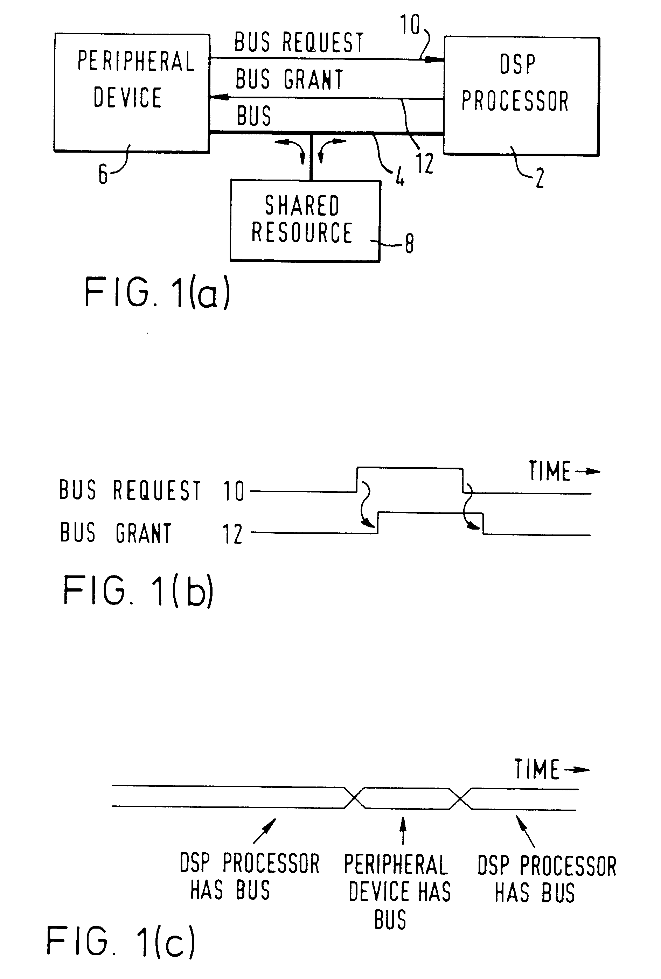

As shown in Figure 1 (a), in a known DSP processor circuit, a DSP processor 2 is assigned to a data bus 4 most, say 99%, of the time. The bus 4 is assigned to the processor 2 by default. Occasionally, a peripheral device 6 requests access via bus 4, to shared resource 8. In response, the processor 2 grants peripheral device 6 access to shared resource 8 by assigning the bus 4 to peripheral device 6.

Bus assignment is undertaken by a bus request/bus grant protocol. As shown in Figure 1 (b), the peripheral module 6 sends a bus request signal 10 to the processor 2. The processor 2 responds by sending a bus grant signal 12 to the peripheral device 6. The bus 4 is thereby assigned to the peripheral device 6 as shown in Figure 1 (c), allowing the peripheral device 6 to communicate with the shared resource 8. When such communication is complete and the bus is no longer required by the peripheral device 6, the peripheral device 6 ceases to send a bus grant signal 12. The bus 4 then returns to being assigned to the processor 2.

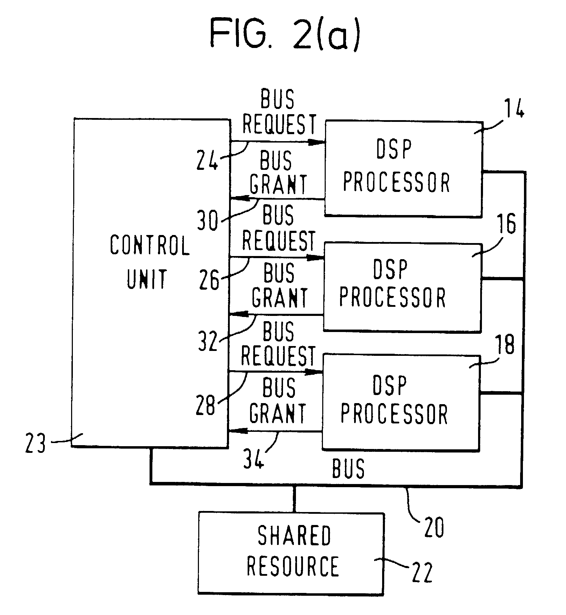

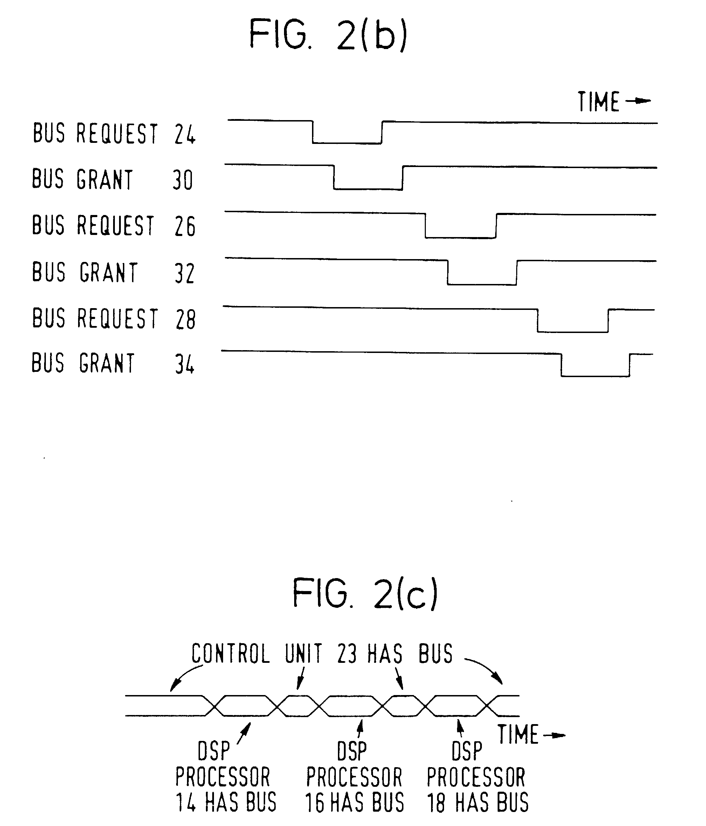

Referring to Figure 2 (a), an embodiment of the present invention includes three DSP processors 14, 16, 18 which share a common data bus 20, via which access is made to a shared resource 22, specifically a proprietary high-performance dedicated processing circuit which is able to support the combined processing requirements of the three DSP processors 14, 16, 18. A control unit 23, specifically a DSP command interface, also shares the bus 20.

The control unit 23 maintains bus request signals 24, 26, 28 by default, causing the processors 14, 16, 18 to maintain corresponding bus grant signals 30, 32, 34.

The processors 14, 16, 18 each operate independently, performing internal calculations. Prior to any point in its program where a bus read or write is required, a program instruction causes such a need to be transmitted to the control unit 23 via separate control lines (not shown) which are not part of bus 20 and are not shared by DSP processors 14, 16, 18. The control unit 23 operates to assign the bus to each of the processors 14, 16, 18 in turn by selectively removing bus request signals 24, 26, 28 as shown in Figure 2(b), giving each processor a relatively small window of time in which to write to or read from the shared resource 22. The shared resource architecture and the program structure have been designed to cooperate in minimising these read and write window requirements. In this embodiment the control unit 23 may modify the bus assignments intelligently on the basis of individual DSP processor status so as to maximise the overall system performance.

It will be seen in the preferred embodiment of the present invention, as shown in Figures 2 (c), the control unit 23 is the "master" to which the bus is assigned by default.

In the preferred embodiment the control unit 23 ensures that only one of the DSP processors 14, 16, 18 can be assigned the bus 20 at any instant in time.

In addition to the normal operation described above and illustrated in Figure 2, the control unit 23 also initially assigns bus 20 to the DSP processors 14, 16, 18 in turn for the purposes of code download, and thereafter seeks to minimise the effect on the bus 20 of a malfunction of any DSP processor 14, 16, 18 by monitoring the activity of bus 20 and forcibly removing and subsequently refusing to offer the bus 20 to any DSP processor 14, 16, 18 which has been observed to malfunction.

The fact that the DSP processors 14, 16, 18 do not need to be aware of each other or perform any polling or synchronising functions result in simple and efficient software and hardware, both of which are instrumental in allowing the programs to execute at a speed which matches the shared resource 22.

## Claims

1. An electronic circuit comprising a plurality of processors (14, 16, 18), a common bus (20) to a resource (22) for sharing by the processors, and a control unit (23), the control unit controlling assignment of the bus to each processor, the bus being assigned by default to the control unit, in which the control unit sends a bus request signal (24, 26, 28) by default to each processor causing each processor to send by default a corresponding bus grant signal (30, 32, 34) to the control unit.

2. An electric circuit according to claim 1, in which the control unit (23) operates to assign the bus (20) to each of the processors (14, 16, 18) by selectively removing the bus request signals (24, 26, 28).

3. An electronic circuit according to claim 2, in which the control (23) unit operates to assign the bus (20) to each of the processors (14, 16, 18) in turn.

4. An electronic circuit according to any of claims 1 to 3, in which the processors (14, 16, 18) are digital signal processing DSP processors.

5. An electronic circuit according to claim 4 comprising three DSP processors.

6. An electronic circuit according to any preceding claim, in which the control unit (23) controls the timing and sequence of assignments of the bus (20) to the processors (14, 16, 18).

7. An electronic circuit according to any preceding claim, in which the control unit (23) acts to assign the bus (20) according to a predetermined rule in response to bus assignment requests from the processors (14, 16, 18).

8. An electronic circuit according to claim 7, in which the control unit (23) assigns the bus (20) according to a rule dependent on priorities assigned to processors (14, 16, 18).

9. An electronic circuit according to any preceding claim, in which the bus (20) is assigned to no more than one processor (14, 16, 18) at a time.

10. An electronic circuit according to any preceding claim, in which each processor (14, 16, 18) includes internal memory so as to be operative to continue to execute instructions without the bus being (20) assigned thereto.

11. An electronic circuit according to any preceding claim, in which each processor (14, 16, 18) includes registers so as to be operative to continue to execute instructions without the bus (20) being assigned thereto.

12. An electronic circuit according to claim 10 or claim 11, in which each processor (14, 16, 18) is operative without bus assignment to continue to execute instructions which both use the internal memory or registers and do not require a bus assignment to transfer data to or from the shared resource (22).

13. An electronic circuit according to claim 12, in which when an instruction is reached which requires the bus (20), execution halts until the bus is assigned to the processor (14, 16, 18).

14. An electronic circuit according to any preceding claim, in which upon switch-on the control unit (23) initially assigns the bus (20) to each processor (14, 16, 18) in turn to enable downloading of processing instructions then assigns the bus by default to the control unit.

15. An electronic circuit according to any preceding claim, in which the control unit (23) does not assign the bus (20) to a processor (14, 16, 18) despite a bus request from that processor where a malfunction has been detected in respect of that processor.

16. A method of assigning a common bus (20) to a resource (22) shared by a plurality of processors (14, 16, 18) in an electronic circuit, by providing a control unit (23), assigning the bus by default to the control unit in which the control unit sends a bus request signal (24, 26, 28) by default to each processor causing each processor to send by default a corresponding bus grant signal (30, 32, 34) to the control unit, the control unit selectively responding to bus requests from each said processor to selectively assign the bus to the requesting processor(s).

## Patentansprüche

1. Elektronische Schaltung mit einer Mehrzahl von Prozessoren (14, 16, 18), einem gemeinsamen Bus (20) zu einem gemeinsamen Betriebsmittel (20) zur gemeinsamen Benutzung durch die Prozessoren und einer Steuereinheit (23), wobei die Steuereinheit die Zuweisung des Busses an jeden Prozessor steuert, der Bus voreingestellt der Steuereinheit zugewiesen wird, wobei die Steuereinheit ein Busanforderungssignal (24, 26, 28) voreingestellt jedem Prozessor sendet, wodurch jeder Prozessor dazu veranlaßt wird, voreingestellt ein entsprechendes Busbewilligungssignal (30, 32, 34) der Steuereinheit zu senden.

2. Elektronische Schaltung nach Anspruch 1, dadurch gekennzeichnet, daß die Steuereinheit (23) derart arbeitet, daß der Bus (20) jedem der Prozessoren (14, 16, 18) durch selektives Entfernen der Busanforderungssignale (24, 26, 28) zugewiesen wird.

3. Elektronische Schaltung nach Anspruch 2, dadurch gekennzeichnet, daß die Steuereinheit (23) derart arbeitet, daß der Bus (20) jedem der Prozessoren (14, 16, 18) der Reihe nach zugewiesen wird.

4. Elektronische Schaltung nach einem der Ansprüche 1 bis 3, dadurch gekennzeichnet, daß die Prozessoren (14, 16, 18) digitalsignalverarbeitende DSP-Prozessoren sind.

5. Elektronische Steuerschaltung nach Anspruch 4, gekennzeichnet durch drei DSP-Prozessoren.

6. Elektronische Schaltung nach einem der vorausgehenden Ansprüche, dadurch gekennzeichnet, daß die Steuereinheit (23) den Zeitablauf und die Sequenz von Zuweisungen des Busses (20) an die Prozessoren (14, 16, 18) steuert.

7. Elektronische Schaltung nach einem der vorausgehenden Ansprüche, dadurch gekennzeichnet, daß die Steuereinheit (23) derart arbeitet, daß der Bus (20) entsprechend einer vorbestimmten Regel im Ansprechen auf Buszuweisungsanforderungen von den Prozessoren (14, 16, 18) zugewiesen wird.

8. Elektronische Schaltung nach Anspruch 7, dadurch gekennzeichnet, daß die Steuereinheit (23) den Bus (20) entsprechend einer Regel in Abhän.gigkeit von den Prozessoren (14, 16, 18) zugewiesenen Prioritäten zuweist.

9. Elektronische Schaltung nach einem der vorausgehenden Ansprüche, dadurch gekennzeichnet, daß der Bus (20) nicht mehr als einem Prozessor (14, 16, 18) auf einmal zugewiesen wird.

10. Elektronische Schaltung nach einem der vorausgehenden Ansprüche, dadurch gekennzeichnet, daß jeder Prozessor (14, 16, 18) einen internen Speicher enthält, um operativ zu sein, mit dem Ausführen von Befehlen fortzufahren, ohne daß der Bus (20) entsprechend zugewiesen wird.

11. Elektronische Schaltung nach einem der vorausgehenden Ansprüche, dadurch gekennzeichnet, daß jeder Prozessor (14, 16, 18) Register enthält, um operativ zu sein, mit der Ausführung von Befehlen fortzufahren, ohne daß der Bus (20) entsprechend zugewiesen wird.

12. Elektronische Schaltung nach Anspruch 10 oder 11, dadurch gekennzeichnet, daß jeder Prozessor (14, 16, 18) ohne Buszuweisung operativ ist, mit der Ausführung von Befehlen fortzufahren, welche sowohl den internen Speicher oder die Register verwenden als auch eine Buszuweisung nicht erfordern, um Daten zu oder von dem gemeinsam benutzten Betriebsmittel (22) zu übertragen.

13. Elektronische Schaltung nach Anspruch 12, dadurch gekennzeichnet, daß die Ausführung Halt macht, bis der Bus dem Prozessor (14, 16, 18) zugewiesen ist, wenn ein Befehl ankommt, welcher den Bus (20) erfordert.

14. Elektronische Schaltung nach einem der vorausgehenden Ansprüche, dadurch gekennzeichnet, daß die Steuereinheit (23) auf ein Einschalten anfänglich den Bus (20) jedem Prozessor (14, 16, 18) der Reihe nach zuweist, um ein Laden von Verarbeitungsbefehlen zu ermöglichen, und danach der Bus voreingestellt der Steuereinheit zugewiesen wird.

15. Elektronische Schaltung nach einem der vorausgehenden Ansprüche, dadurch gekennzeichnet, daß die Steuereinheit (23) den Bus (20) nicht einem Prozessor (14, 16, 18) trotz einer Busanforderung von demjenigen Prozessor zuweist, bezüglich dem eine Fehlfunktion erfaßt worden ist.

16. Verfahren zum Zuweisen eines gemeinsamen Busses (20) einem Betriebsmittel (22), welches von einer Mehrzahl von Prozessoren (14, 16, 18) in einer elektronischen Schaltung gemeinsam benutzt wird, mit den Schritten:
Bereitstellen einer Steuereinheit (23),
voreingestelltes Zuweisen des Busses der Steuereinheit, wobei die Steuereinheit ein Busanforderungssignal (24, 26, 28) voreingestellt jedem Prozessor sendet, wodurch veranlaßt wird, daß jeder Prozessor voreingestellt ein entsprechendes Busbewilligungssignal (30, 32, 34) der Steuereinheit sendet, und die Steuereinheit selektiv auf die Busanforderungen von jedem der Prozessoren anspricht, um selektiv den Bus dem anfordernden Prozessor bzw. den anfordernden Prozessoren zuzuweisen.

## Revendications

1. Circuit électronique comprenant une pluralité de processeurs (14,16,18), un bus commun (20) à une ressource (22) à partager par les processeurs et une unité de commande (23), l'unité de commande commandant l'affectation du bus à chaque processeur, le bus étant affecté par défaut à l'unité de commande, dans lequel l'unité de commande envoie un signal de demande de bus (24,26,28) par défaut à chaque processeur en sollicitant chaque processeur pour qu'il envoie par défaut un signal correspondant d'attribution de bus (30,32,34) à l'unité de commande.

2. Circuit électronique selon la revendication 1, dans lequel l'unité de commande (23) a pour fonction d'affecter le bus (20) à chacun des processeurs (14,16,18) en supprimant sélectivement les signaux de demande de bus (24,26,28).

3. Circuit électronique selon la revendication 2, dans lequel l'unité de commande (23) a pour fonction d'affecter le bus (20) à chacun des processeurs (14,16,18), successivement

4. Circuit électronique selon l'une quelconques des revendications 1 à 3, dans lequel les processeurs (14,16,18) sont des processeurs DSP de traitement de signaux numériques.

5. Circuit électronique selon la revendication 4 comprenant 3 processeurs DSP.

6. Circuit électronique selon l'une quelconques des revendications précédentes, dans lequel l'unité de commande (23) commande le chronogramme et la séquence des affectations du bus (20) aux processeurs (14,16,18).

7. Circuit électronique selon l'une quelconques des revendications précédentes, dans lequel l'unité de commande (23) a pour fonction d'affecter le bus (20) selon une règle prédéterminée en réponse aux demandes d'affectation du bus envoyées par les processeurs (14,16,18).

8. Circuit électronique selon la revendication 5, dans lequel l'unité de commande(23) affecte le bus (20) selon une règle qui dépend de priorités affectées aux processeurs (14,16,18).

9. Circuit électronique selon l'une quelconques des revendications précédentes, dans lequel le bus (20) est affecté à seulement un processeur (14,16,18) à la fois.

10. Circuit électronique selon l'une quelconques des revendications précédentes, dans lequel chaque processeur (14,16,18) comprend une mémoire interne de façon à être fonctionnel et à continuer à exécuter des instructions sans que le bus (20) lui soit affecté.

11. Circuit électronique selon l'une quelconques des revendications précédentes, dans lequel chaque processeur (14,16,18) comprend des registres de façon à être fonctionnel pour continuer à exécuter des instructions sans que le bus (20) lui soit affecté.

12. Circuit électronique selon l'une des revendications 10 ou 11, dans lequel chaque processeur (14,16,18) est fonctionnel sans affectation du bus pour continuer à exécuter des instructions qui à la fois utilisent la mémoire interne ou des registres et n'exigent pas l'affectation du bus pour transférer des données en entrée ou en sortie de la ressource partagée (22).

13. Circuit électronique selon la revendication 12, dans lequel quand une instruction est atteinte et qu'elle nécessite le bus (20), l'exécution est arrêtée jusqu'à ce que le bus soit affecté au processeur (14,16,18)

14. Circuit électronique selon l'une quelconques des revendications précédentes, dans lequel au moment de la mise sous tension, l'unité de commande (23) affecte initialement le bus (20) à chaque processeur (14,16,18) successivement pour permettre le téléchargement d'instructions de traitement puis affecte le bus par défaut à l'unité de commande.

15. Circuit électronique selon l'une quelconque des revendications précédentes dans lequel l'unité de commande (23) n'affecte pas le bus (20) à un processeur (14,16,18) malgré une demande de bus provenant de ce processeur lorsqu'un défaut de fonctionnement a été détecté par rapport à ce processeur.

16. Procédé d'affectation d'un bus commun (20) à une ressource (22) partagée par une pluralité de processeurs (14,16,18) dans un circuit électronique en prévoyant une unité de commande (23) affectant le bus par défaut à l'unité de commande, dans laquelle l'unité de commande envoie un signal de demande de bus (14,16,28) par défaut à chaque processeur en sollicitant chaque processeur à envoyer par défaut un signal correspondant d'attribution de bus (30,32,34) à l'unité de commande, l'unité de commande répondant sélectivement aux demandes du bus provenant de chacun desdits processeurs pour affecter sélectivement le bus au (aux) processeur(s).
